(19) Europäisches Patentamt
European Patent Office
Office européen des brevets

(11) Numéro de publication : **0 463 938 A1**

(12) **DEMANDE DE BREVET EUROPEEN**

(21) Numéro de dépôt : **91401656.3**

(51) Int. Cl.$^5$ : **G01N 21/17**

(22) Date de dépôt : **19.06.91**

(30) Priorité : **21.06.90 FR 9007766**

(43) Date de publication de la demande :
**02.01.92 Bulletin 92/01**

(84) Etats contractants désignés :
**DE FR GB**

(71) Demandeur : **UNIVERSITE DE REIMS CHAMPAGNE-ARDENNE**
**23, rue Boulard**
**F-51097 Reims Cédex (FR)**

(72) Inventeur : **Merienne, Etienne**
**68 rue de Sillery**
**F-51100 Reims (FR)**
Inventeur : **Egee, Michel**
**5 rue de la Meuse**
**F-51100 Reims (FR)**
Inventeur : **Heuret, Michel**
**9 Allée du Berry**
**F-51350 Cormontreuil (FR)**
Inventeur : **Regalia, Marcel**
**18 rue de l'Adriatique**
**F-51100 Reims (FR)**

(74) Mandataire : **Martin, Jean-Jacques et al**
**Cabinet REGIMBEAU 26, Avenue Kléber**
**F-75116 Paris (FR)**

(54) **Dispositif d'analyse photothermique de matériaux minces.**

(57) Dispositif d'analyse photothermique de matériaux minces, comportant une source lumineuse (10) couplée à des moyens (21, 22, 23, 24) de modulation destinés à soumettre un échantillon (30) de matériau à un signal lumineux d'excitation e(t) modulé en amplitude, des moyens (41, 42, 43) de détection fournissant un signal photothermique s(t) représentatif du rayonnement thermique émis par l'échantillon (30) en réponse au signal d'excitation, et des moyens (21, 50) de calcul de la réponse de l'échantillon par comparaison entre le signal photothermique s(t) et le signal d'excitation e(t).

Selon l'invention, les moyens (21, 22, 23, 24) de modulation produisent une modulation d'amplitude du signal d'excitation e(t) sous la forme d'un signal binaire pseudo-aléatoire constitué à partir d'une séquence de base de N pas élémentaires de durée $\Delta$ t, et les moyens (21, 50) de calcul de la réponse de l'échantillon comprennent des moyens (50) d'intercorrélation entre le signal photothermique s(t) et le signal d'excitation e(t) fournissant la réponse impulsionnelle Imp(t) de l'échantillon.

Application à la radiométrie photothermique.

EP 0 463 938 A1

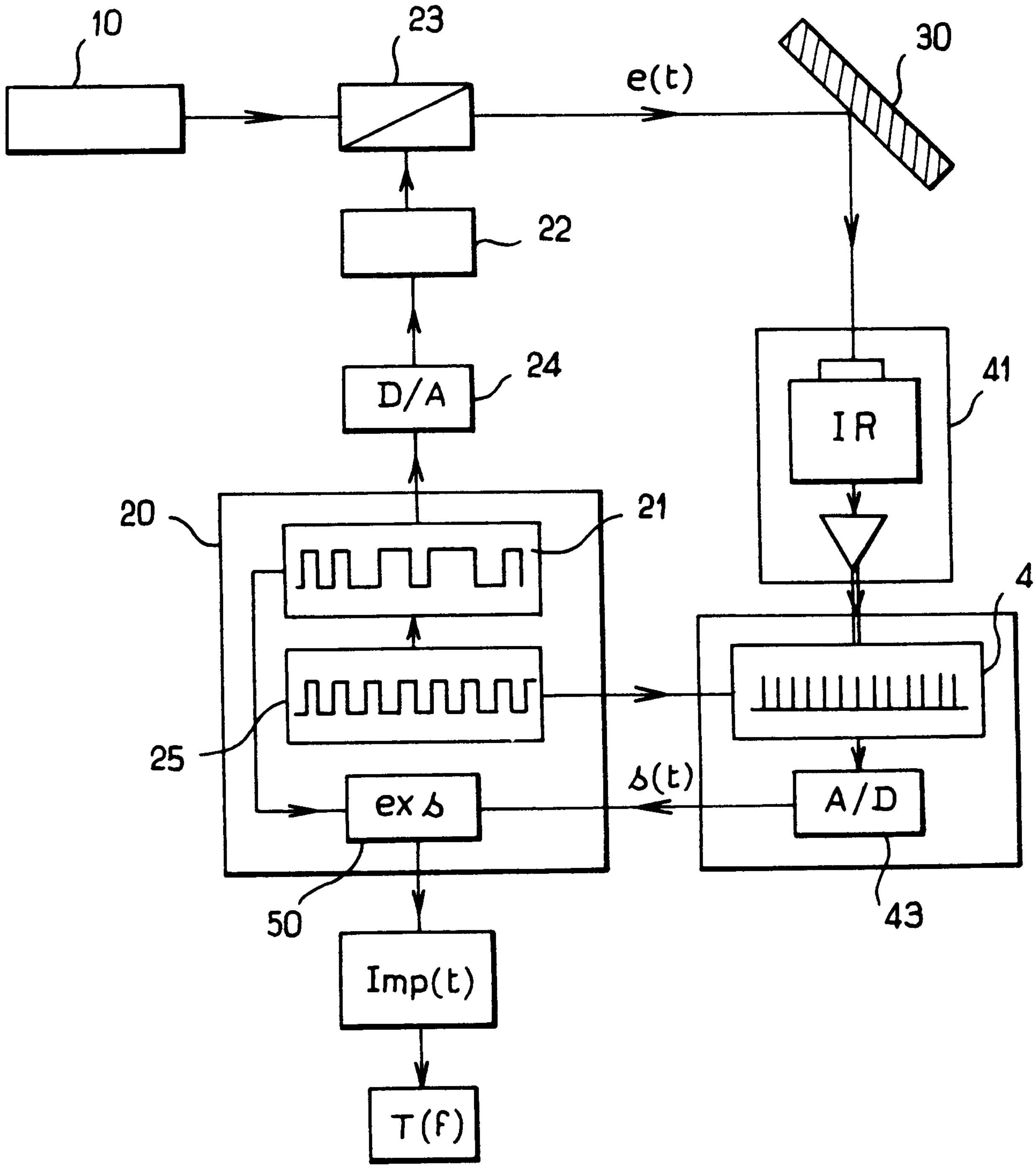

10
23
e(t)
30
22
24
D/A
41
IR
20
21
42
25
$\delta(t)$
ex $\delta$
A/D
50
43
Imp(t)
T(f)


FIG_1

La présente invention concerne un dispositif d'analyse photothermique de matériaux minces, comportant une source lumineuse couplée à des moyens de modulation destinés à soumettre un échantillon de matériau à un signal lumineux d'excitation e(t) modulé en amplitude, des moyens de détection fournissant un signal photothermique s(t) représentatif du rayonnement thermique émis par l'échantillon en réponse au signal d'excitation, et des moyens de calcul de la réponse de l'échantillon par comparaison entre le signal photothermique s(t) et le signal d'excitation e(t).

L'invention trouve une application particulièrement avantageuse dans le domaine de la caractérisation, par radiométrie photothermique ponctuelle, de matériaux d'épaisseur allant sensiblement de quelques microns au millimètre. Cette technique d'investigation convient bien lorsque la méthode de thermographie photothermique classique, compte tenu de la rapidité des régimes thermiques transitoires, ne convient plus. Il faut alors utiliser une excitation focalisée et un détecteur rapide.

On connaît de l'état de la technique un dispositif d'analyse photothermique conforme au préambule comprenant une source lumineuse à effet laser dont le faisceau est modulé en amplitude par un modulateur mécanique constitué par un secteur circulaire tournant fournissant un signal d'excitation périodique en créneaux dont la fréquence est proportionnelle à la vitesse de rotation du secteur circulaire. Le rayonnement thermique émis par l'échantillon étudié est détecté par une cellule infrarouge qui délivre un signal photothermique dont les variations d'amplitude et de phase en fonction de la fréquence de modulation sont déterminées par comparaison, à l'aide d'un détecteur synchrone, avec un signal de référence prélevé sur le signal d'excitation, en sortie du modulateur mécanique.

Ce dispositif d'analyse photothermique, connu par exemple de la demande de brevet français n° 86 01613, permet donc d'obtenir point par point la fonction de transfert de l'échantillon. Il faut toutefois remarquer que ce résultat exige d'effectuer un grand nombre de mesures sur toute la gamme de fréquence à balayer.

Aussi, le problème technique à résoudre par l'objet de la présente invention est de proposer un dispositif d'analyse photothermique conforme au préambule grâce auquel il serait possible d'obtenir, en une seule fois et sur une large dynamique de fréquence, toutes les informations nécessaires à la détermination de la réponse de l'échantillon de matériau mince analysé.

La solution au problème technique posé consiste, selon la présente invention, en ce que les moyens de modulation produisent une modulation d'amplitude du signal d'excitation e(t) sous la forme d'un signal binaire pseudo-aléatoire constitué à partir d'une séquence de base de N pas élémentaires de durée $\Delta$ t, et en ce que les moyens de calcul de la réponse de l'échantillon comprennent des moyens d'intercorrélation entre le signal photothermique s(t) et le signal d'excitation e(t).

On entend par signal binaire pseudo-aléatoire un signal qui, d'une part, est binaire car il possède seulement deux niveaux d'amplitude (0 et 1) et qui, d'autre part, est pseudo-aléatoire en ce sens que chacune des séquences binaires de N pas est aléatoire dans le temps et présente une fonction d'autocorrélation qui s'apparente à une fonction de Dirac. Ce signal, dont les caractéristiques statistiques sont donc proches de celles d'un "bruit blanc", engendre dans l'échantillon à tester un signal photothermique s(t) dont le produit d'intercorrélation avec la séquence d'excitation permet d'obtenir la réponse impulsionnelle de l'échantillon, à condition toutefois, comme c'est généralement le cas, que le système constitué par l'échantillon et les moyens de détection soit un système linéaire. La réponse photothermique impulsionnelle contient toutes les informations qui seront utiles dans la suite pour la caractérisation de l'échantillon ; en particulier, sa transformée de Fourier fournit, sur un domaine de fréquence étendu et en un temps environ 100 fois plus court que sous excitation sinusoïdale, la fonction de transfert, en amplitude et en phase, utile à la caractérisation thermophysique du matériau en couche mince étudié.

La réponse photothermique impulsionnelle de l'échantillon aurait pu être obtenue classiquement en appliquant un signal d'excitation ayant la forme d'un pic de Dirac, et en enregistrant directement la réponse du système. Cette méthode présente cependant l'inconvénient qu'un pic de Dirac doit rester peu énergétique, sous peine de dépasser en amplitude le domaine de linéarité de l'échantillon et de détruire l'échantillon. Il en résulte un mauvais rapport signal à bruit. Par contre, le dispositif selon l'invention offre l'avantage que le signal d'excitation équivalent à un "bruit blanc" peut être de faible amplitude et donc rester inférieur au seuil de linéarité du système, ce qui permet d'accéder à la même somme d'informations avec une contrainte thermique moindre pour l'échantillon. De plus, en appliquant le signal d'excitation aussi longtemps que nécessaire, il est possible d'obtenir un rapport signal à bruit de valeur élevée.

Outre le fait que les résultats peuvent être présentés immédiatement à la fois sous forme de réponse impulsionnelle ou de fonction de transfert photothermique, le dispositif, objet de l'invention, présente d'autres avantages par rapport aux dispositifs connus. La gamme d'épaisseur contrôlée, notamment, peut être sensiblement plus large, en particulier vers les grandes valeurs. Ceci est dû au fait que l'exploration des couches profondes met en oeuvre les basses fréquences et que la méthode par excitation périodique et détection synchrone ne permet pas de descendre facilement au-dessous de 10 Hz environ, alors que le dispositif selon l'invention

conduit à un incrément de fréquence $\Delta f = 1/N. \Delta t$ pouvant atteindre 1/10 Hz. D'autre part, disposant d'une procédure d'autoétalonnage, l'utilisation d'un échantillon de référence, toujours délicate, devient inutile, contrairement à la détection synchrone pour laquelle une référence de phase est nécessaire.

Enfin, comme on le verra en détail plus loin, il est possible de prendre en compte les régimes transitoires et d'éventuelles dérives lentes, d'origine thermique ou liées à l'appareillage, et d'en corriger les effets.

La description qui va suivre en regard des dessins annexés, donnés à titre d'exemples non limitatifs, fera bien comprendre en quoi consiste l'invention et comment elle peut être réalisée.

La figure 1 est un schéma d'un dispositif d'analyse photothermique selon l'invention.

Les figures 2a à 2c sont des diagrammes en fonction du temps des différents signaux impliqués dans le dispositif de la figure 1.

La figure 3 représente un exemple expérimental de réponse impulsionnelle obtenue à l'aide du dispositif de la figure 1.

La figure 4 montre l'amplitude (a) et la phase (b) de la fonction de transfert correspondant à la réponse impulsionnelle montrée à la figure 3.

La figure 5 est le schéma d'une variante de réalisation du dispositif de la figure 1.

La figure 1 montre, sur un schéma synoptique, un dispositif d'analyse photothermique de matériaux minces, comportant une source lumineuse 10 qui peut être par exemple un laser à argon ionisé émettant une onde lumineuse dans le domaine visible. La source 10 est couplée à des moyens de modulation qui, dans le mode de réalisation représenté à la figure 1, sont constitués par un modulateur électro-optique 23, cellule à effet Pockels par exemple, dont le circuit 22 d'alimentation est commandé, par l'intermédiaire d'un convertisseur 24 numérique-analogique, par un générateur numérique 21 de telle sorte que, en sortie de la cellule 23 à effet Pockels, le signal lumineux d'excitation e(t) soit modulé en amplitude selon une séquence binaire pseudo-aléatoire. Le générateur numérique 21 fait, par exemple, partie d'un micro-ordinateur 20 fonctionnant avec une horloge 25 fournissant un signal de référence à la période $\Delta$ t comme représenté sur la figure 2a. Bien entendu, une même modulation du signal d'excitation e(t) pourrait être réalisée en appliquant directement le signal en sortie du convertisseur 24 numérique-analogique à l'alimentation de la source lumineuse 10. Ce mode de mise en oeuvre convient particulièrement bien aux lasers à semi-conducteurs.

La figure 2b montre un exemple de séquence binaire pseudo-aléatoire de N pas élémentaires de durée $\Delta$ t, constituée à partir du signal d'horloge de la figure 2a et d'un algorithme stocké dans une mémoire du micro-ordinateur 20, appliqué au générateur numérique 21 et permettant de fournir de façon aléatoire une série de 0 ou de 1. Cette séquence de N pas et de durée N $\Delta$ t est définie une fois pour toutes par le générateur numérique 21 et reproduite identique à elle-même à la période de répétition N $\Delta$ t. Le nombre N de pas est également fixé par construction, à 511 par exemple.

En réponse au signal lumineux d'excitation e(t), l'échantillon 30 de matériau mince montré à la figure 1 émet un rayonnement thermique qui est reçu par des moyens de détection comprenant un détecteur infrarouge 41, par exemple une cellule à HgCdTe fonctionnant autour d'une longueur d'onde de 10 $\mu$m. Le signal sortant du détecteur 41 de rayonnement, représenté en trait plein sur la figure 2c, est ensuite échantillonné au pas $\Delta$ t par un échantillonneur 42 commandé par le micro-ordinateur 20. En retour, un convertisseur 43 analogique-numérique fournit N valeurs du signal photothermique s(t) au micro-ordinateur 20 qui réalise alors, à l'aide d'un corrélateur 50, la fonction d'intercorrélation entre le signal d'excitation et le signal photothermique du matériau à tester. Cette fonction est donné par l'estimateur

$$Ces\ (k) = 1/N \sum_{r=1}^{N} e\ (r - k)\ .\ s\ (r)$$

où e(r-k) est la valeur binaire du (r-k)ième échantillon de la séquence binaire du signal d'excitation e(t) et s(r) la valeur de l'amplitude du signal photothermique s(t) correspondant à l'échantillon numéro r. Cet estimateur, calculé sur les N pas d'une période N $\Delta$ t de l'excitation, est non biaisé. A condition de choisir le nombre de pas N suffisamment grand, la fonction de corrélation Ces (k) donne une très bonne approximation de la réponse impulsionnelle photothermique Imp(t) du matériau étudié. Comme on peut le voir à la figure 1, ce résultat est obtenu avec un appareillage électronique simplifié par rapport à celui nécessaire pour les autres modes d'excitation, puisqu'il ne met en oeuvre qu'un digitaliseur constitué par l'échantillonneur 42 et le convertisseur 43 au lieu d'un détecteur synchrone utilisé dans le cas d'une excitation périodique.

Si l'utilisateur choisit d'étudier les propriétés thermiques de l'échantillon à partir de la courbe de phase de la fonction de transfert, il doit calculer la transformée de Fourier T(f) de la réponse impulsionnelle Imp(t) obtenue

précédemment. Le calcul de la transformée de Fourier discrète se fait par :

$$Tes\ (n \Delta f) = \sum_{k=1}^{N} Ces\ (k \Delta t)\ \exp\ (-2\pi j\ n\ k/N) \Delta f$$

où $\Delta f$ est le pas fréquentiel de la transformée de Fourier discrète, relié au pas temporel $\Delta t$ d'échantillonnage par

$$\Delta f = 1/N.\Delta t$$

Pour éviter les erreurs de recouvrement de spectre, il est important de choisir convenablement la valeur de $\Delta t$. Pour des mesures demandant une grande précision, il pourra s'avérer nécessaire de diminuer la valeur de $\Delta t$ en augmentant celle de N.

A titre d'exemple, avec $\Delta t$ = 20 ms et N = 511, on trouve un pas fréquentiel $\Delta f$ d'échantillonnage de la transformée de Fourier de l'ordre de 0,1 Hz.

la figure 3 est un exemple de réponse impulsionnelle Imp(t) obtenue expérimentalement par la Demanderesse sur un échantillon de carbone avec un pas temporel $\Delta t$ de 0,4 ms et N = 511 points de mesure. Le signal s(t) porté sur la même figure est le signal de sortie du détecteur infrarouge, correspondant à la courbe en trait plein de la figure 2c. Les courbes a) et b) de la figure 4 représentent respectivement l'amplitude A(f) et la phase φ(f) de la transformée de Fourier T(f) de la réponse impulsionnelle Imp(t) de la figure 3.

la figure 5 est le schéma d'une variante de réalisation du dispositif de la figure 1 qui permet de s'affranchir des effets transitoires dûs notamment à la mise en régime de l'échantillon sous excitation. D'autres causes existent comme par exemple les instabilités de la source. Compte tenu que pour certains matériaux (selon leur structure, leur composition, leur épaisseur, ...) le temps de mise à l'équilibre peut atteindre plusieurs minutes, voire plusieurs dizaines de minutes, il est indispensable de prévoir dans le dispositif d'analyse photothermique selon l'invention des moyens de compensation de ces effets transitoires de façon à réduire le temps de mesure total, ce qui est impératif lorsque l'on veut former une image de l'échantillon à partir d'un grand nombre, 10 000 par exemple, de points de mesure. La réalisation desdits moyens de compensation repose sur l'idée de base que le signal photothermique effectif peut être considéré comme la somme d'un signal photothermique idéal (celui obtenue en régime établi), correspondant à celui de la figure 2c, et d'un signal provenant de la montée en température que, pour simplifier, on assimilera à une rampe linéaire. C'est l'effet de cette dernière composante d'excitation qu'il faut éliminer de la réponse impulsionnelle Imp(t) mesurée.

Dans ce but, les moyens de compensation comportent un circuit 61 de corrélation fournissant la fonction d'intercorrélation COMP(t) du signal d'excitation e(t) avec une rampe linéaire de pente quelconque stockée sous la forme de N = 511 points dans une mémoire du micro-ordinateur 20.

De façon à déterminer le coefficient de proportionnalité à appliquer à la fonction de compensation, un circuit 62 permet d'ajuster, à l'aide d'une méthode de moindre carrée, les p ($\leqq$ N) derniers points de la fonction COMP(t) avec un polynôme de référence de degré n, puis fournit l'écart-type $\tau_1$ de la fonction de compensation avec ledit polynôme de référence. A titre d'exemple, p peut être pris égal à 200 et n égal à 4. D'une façon générale, le degré n sera d'autant plus grand que le nombre p de points est plus élevé. Un autre circuit 63 effectue la même opération sur la réponse impulsionnelle Imp(t) pour donner l'écart-type $\tau_2$ correspondant. Le coefficient de proportionnalité cherché est $\tau_2/\tau_1$. Enfin, un circuit 64 réalise la différence

$$Imp(t) - (\tau_2/\tau_1)\ COMP(t)$$

pour donner la réponse impulsionnelle corrigée, au moins en grande partie, des effets transitoires.

## Revendications

1. Dispositif d'analyse photothermique de matériaux minces, comportant une source lumineuse (10) couplée à des moyens (21, 22, 23, 24) de modulation destinés à soumettre un échantillon (30) de matériau à un signal lumineux d'excitation e(t) modulé en amplitude, des moyens (41, 42, 43) de détection fournissant un signal photothermique s(t) représentatif du rayonnement thermique émis par l'échantillon (30) en réponse au signal d'excitation, et des moyens (21, 50) de calcul de la réponse de l'échantillon par comparaison entre le signal photothermique s(t) et le signal d'excitation e(t), caractérisé en ce que les moyens (21, 22, 23, 24) de modulation produisent une modulation d'amplitude du signal d'excitation e(t) sous la forme d'un signal binaire pseudo-aléatoire constitué à partir d'une séquence de base de N pas élémentaires de durée $\Delta t$, et en ce que les moyens (21, 50) de calcul de la réponse de l'échantillon comprennent des moyens (50) d'intercorrélation entre le signal photothermique s(t) et le signal d'excitation e(t) fournissant la réponse impulsionnelle Imp(t) de l'échantillon.

2. Dispositif selon la revendication 1, caractérisé en ce que ladite séquence de base est appliquée directement à la source lumineuse (10).

3. Dispositif selon la revendication 1, caractérisé en ce que les moyens de modulation comportent un modulateur électro-optique ( 2 3) et une alimentation (22) dudit modulateur électro-optique, la séquence de base du signal binaire pseudo-aléatoire étant appliquée à ladite alimentation (22).

4. Dispositif selon l'une quelconque des revendications 1 à 3, caractérisé en ce que les moyens (41, 42, 43) de détection comprennent un détecteur (41) de rayonnement thermique, un échantillonneur (42) au pas $\Delta$ t du signal provenant du détecteur de rayonnement et un convertisseur (43) analogique/numérique.

5. Dispositif selon l'une quelconque des revendications 1 à 4, caractérisé en ce qu'il dispose de moyens de calcul de la transformée de Fourier de la réponse impulsionnelle Imp(t) de l'échantillon, de façon à obtenir les variations avec la fréquence de l'amplitude et de la phase de la fonction de transfert de l'échantillon.

6. Dispositif selon l'une quelconque des revendications 1 à 5, caractérisé en ce qu'il comprend des moyens de compensation des effets transitoires comportant un moyen (61 ) fournissant la fonction d'intercorrélation COMP(t) du signal d'excitation e(t) avec une rampe linéaire, un circuit (62) de calcul d'un écart type $\tau_1$ de la fonction de compensation COMP(t) avec une fonction de référence, un circuit (63) de calcul de l'écart type $\tau_2$ correspondant de la fonction d'intercorrélation s(t) x e(t), et un circuit (64) réalisant la différence s(t) x e(t) - ( $\tau_2 / \tau_1$) COMP(t).

7. Utilisation du dispositif selon la revendication 6 à la formation d'images de l'échantillon.

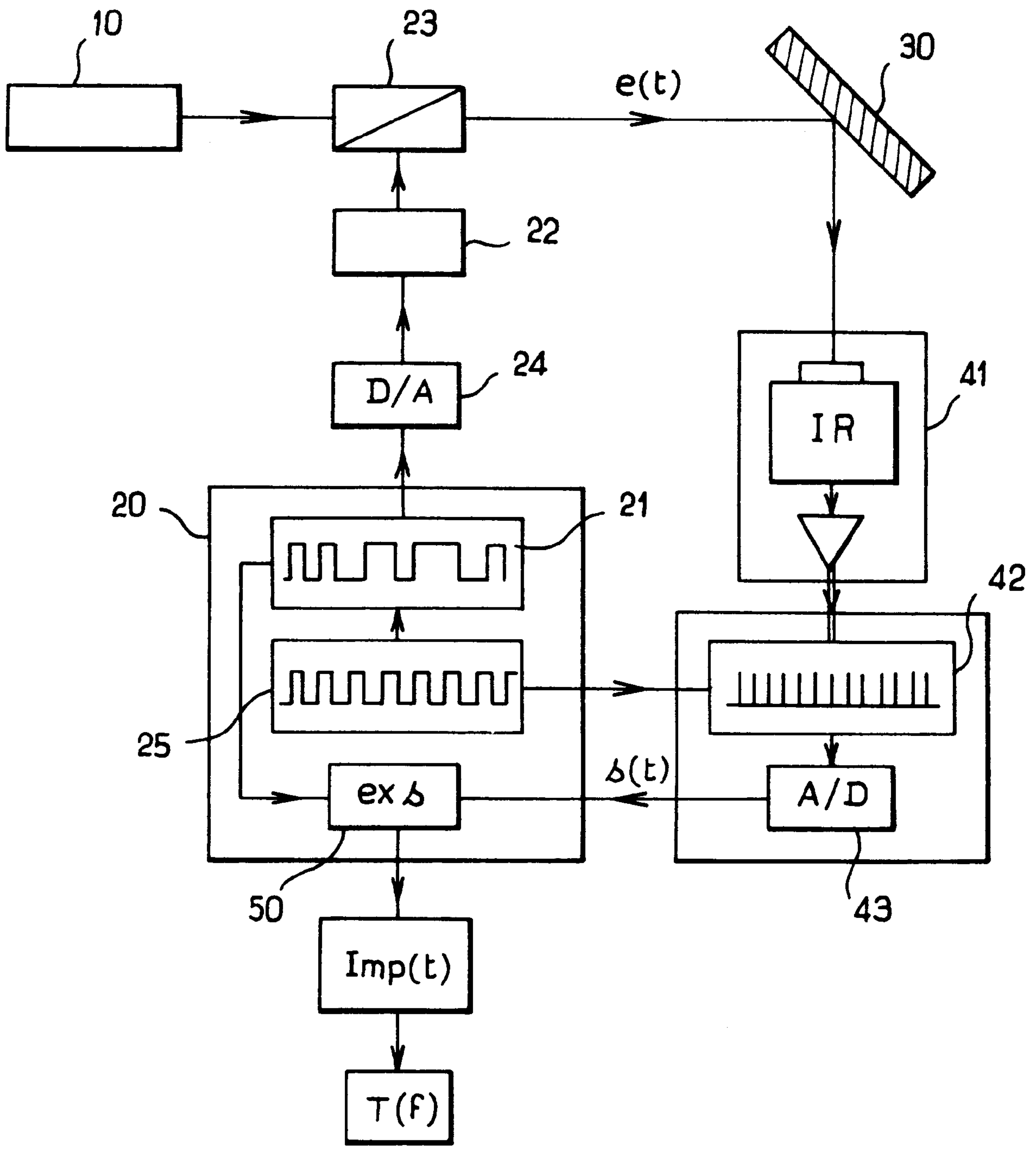


FIG_1

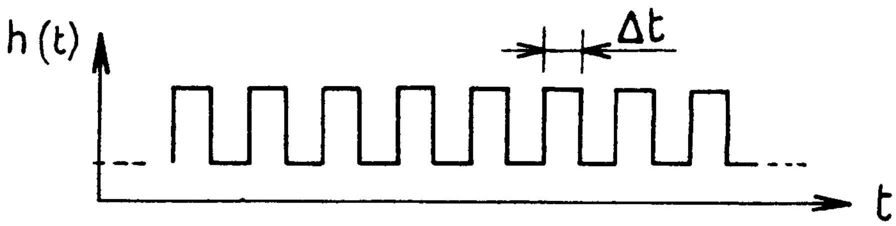


FIG. 2a

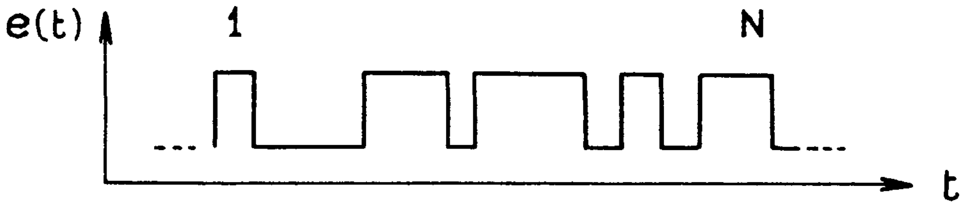


FIG. 2b

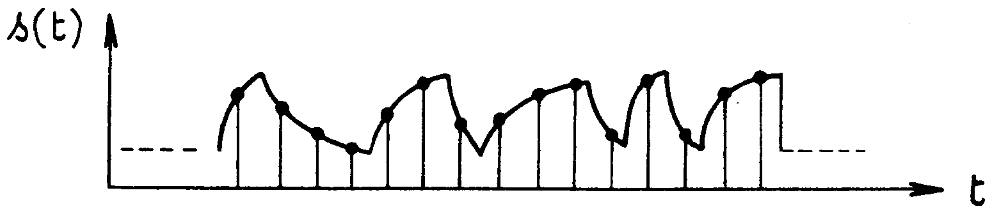


FIG. 2c

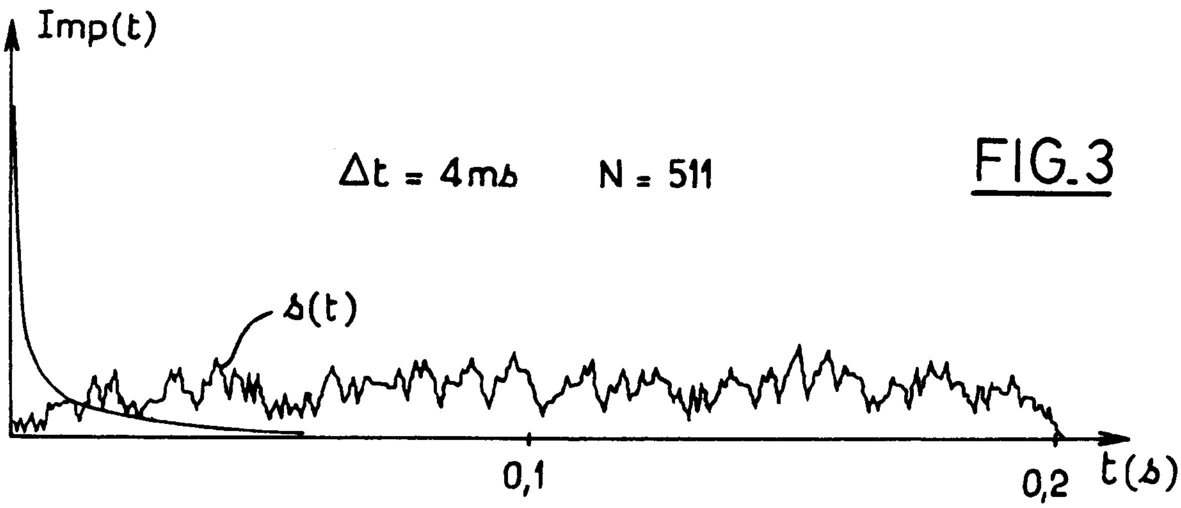


FIG. 3

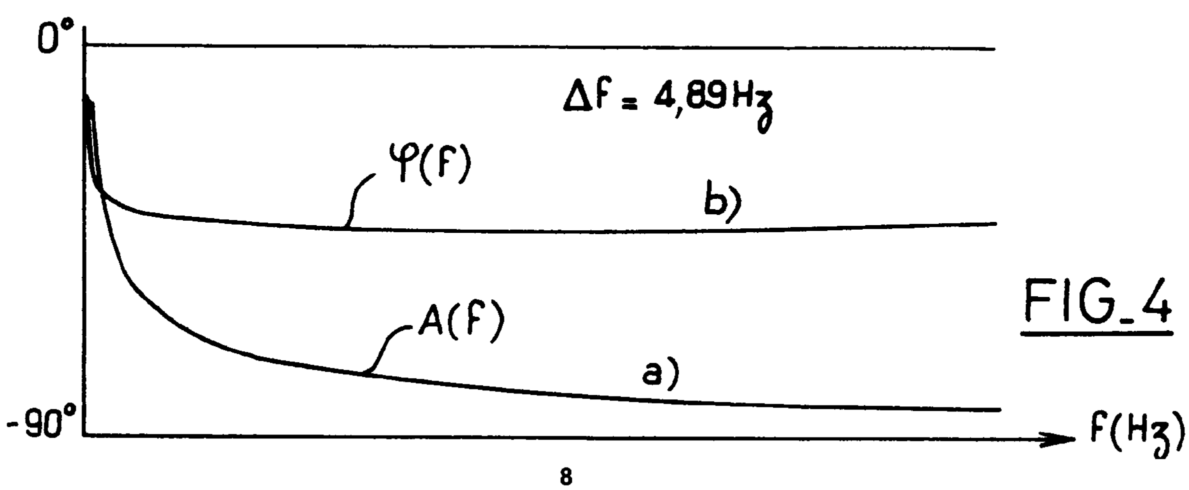


FIG. 4

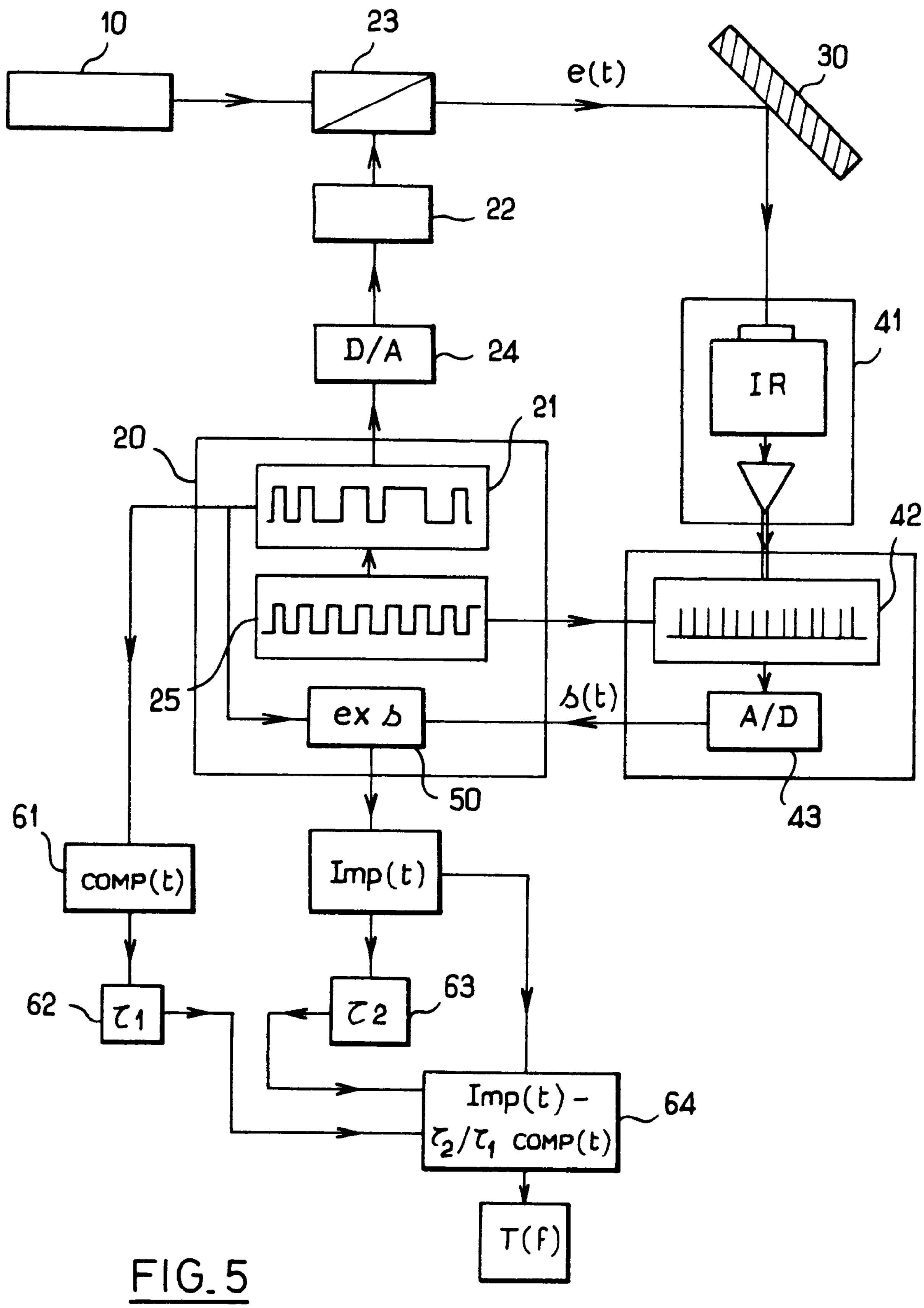

10
23
e(t)
30
22
D/A
24
41
IR
21
20
42
25
ex s
s(t)
A/D
50
43
61
COMP(t)
Imp(t)
62
τ1
τ2
63
Imp(t) -
τ2/τ1 COMP(t)
64
T(f)


FIG. 5

Office européen des brevets

# RAPPORT DE RECHERCHE EUROPEENNE

Numero de la demande

EP 91 40 1656

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | IEEE TRANSACTIONS ON ULTRASONICS, FERROELECTRICS AND FREQUENCY CONTROL vol. 33, no. 5, 1 Septembre 1986, pages 590 - 614; A.MANDELIS: 'Time-delay-domain and pseudorandom-noise photoacoustic and photothermal ' * page 594 - page 597 * | 1,3,4 | G01N21/17 |
| X | PATENT ABSTRACTS OF JAPAN vol. 10, no. 305 (P-507)(2361) 17 Octobre 1986 & JP-A-61 120 041 (Y.SUGITANI ) 7 Juin 1986 * le document en entier * | 1,6 | |
| A | EP-A-233 120 (UNIVERSITE DE REIMS) * page 2 - page 4 * | 1 | |

| DOMAINES TECHNIQUES RECHERCHES (Int. Cl.5 ) |
|---|
| G01N |

Le présent rapport a été établi pour toutes les revendications

| Lieu de la recherche | Date d'achèvement de la recherche | Examinateur |
|---|---|---|
| LA HAYE | 08 OCTOBRE 1991 | BOEHM C.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)